# EUROPEAN PATENT APPLICATION

(11) **EP 4 159 393 A1**
(43) Date of publication of application: **05.04.2023**
(21) Application number: 21814272.7
(22) Date of filing: 11.05.2021
(51) Int. Cl.: B28B 3/00, C01B 33/20, C01F 5/02, C03C 10/00, C09J 1/00, C04B 28/00, C04B 35/04, C04B 35/16

(54) **INORGANIC STRUCTURE AND METHOD FOR PRODUCING SAME**

(30) Priority: 27.05.2020 JP 2020092473
(71) Applicant: Panasonic Intellectual Property Management Co., Ltd., Osaka-shi, Osaka 540-6207 (JP)
(72) Inventor: SATO Natsuki, Osaka-shi, Osaka 540-6207 (JP); SAWA Ryosuke, Osaka-shi, Osaka 540-6207 (JP); YOSHIOKA Tatsuro, Osaka-shi, Osaka 540-6207 (JP); KURIZOE Naoki, Osaka-shi, Osaka 540-6207 (JP); SEKINO Tohru, Suita, Osaka 565-0871 (JP); GOTO Tomoyo, Suita, Osaka 565-0871 (JP); CHO Sunghun, Suita, Osaka 565-0871 (JP); SEO Yeongjun, Suita, Osaka 565-0871 (JP)
(74) Representative: Müller-Boré & Partner Patentanwälte PartG mbB
(86) International application number: PCT/JP2021/017828
(87) International publication number: WO 2021/241194

(57) **Abstract**

Provided is an inorganic structure (1A) including a plurality of inorganic particles (2); and a binding part (3) that covers a surface of each of the inorganic particles (2) and binds the inorganic particles (2) together, wherein the binding part (3) contains: an amorphous compound containing silicon, oxygen, and one or more metallic elements; and fine particles (4) having an average particle size of 100 nm or less. Also provided is a method for producing an inorganic structure (1A) including: a step for obtaining a mixture by mixing a plurality of inorganic particles (11), a plurality of amorphous silicon dioxide particles (12), and an aqueous solution (13) containing a metallic element; and a step for pressurizing and heating the mixture under conditions of a pressure of 10 to 600 MPa and a temperature of 50 to 300 °C.

## Description

### TECHNICAL FIELD

The present invention relates to an inorganic structure and a method for producing the inorganic structure.

### BACKGROUND ART

A sintering method is a known method for producing inorganic structures made from ceramics. The sintering method is a method for obtaining a sintered body by heating an aggregate of a solid powder made from an inorganic substance at a temperature lower than the melting point.

Patent Literature 1 discloses a glass powder made from WO₃, TiO₂, or a solid solution thereof and containing crystals having photocatalytic properties, and further discloses that sintering the glass powder provides a solidified molded product having an arbitrary shape. It is described that such a solidified molded product is useful as photocatalytic functional material having excellent photocatalytic properties.

### CITATION LIST

### PATENT LITERATURE

Patent Literature 1: Japanese Unexamined Patent Application Publication No. 2011-46602

### SUMMARY OF THE INVENTION

However, in the sintering method, energy consumption during manufacturing is large and costly because the solid powder needs to be heated at a high temperature. In addition, if only a solid powder is compacted under low temperature conditions, particles of the solid powder are not sufficiently bound to each other, and thus, the obtained compact has many pores and lacks mechanical strength.

The present invention has been made in consideration of the above issue, which is inherent in the related art. An object of the present invention is to provide an inorganic structure that is prepared through a simple method and has a higher density, and a method for producing the inorganic structure.

In response to the above issue, an inorganic structure according to a first aspect of the present invention includes a plurality of inorganic particles, and a binding part that covers a surface of each of the inorganic particles and binds the inorganic particles together. The binding part contains an amorphous compound containing silicon, oxygen, and one or more metallic elements, and fine particles having an average particle size of 100 nm or less.

A method for producing an inorganic structure according to a second aspect of the present invention includes a step for obtaining a mixture by mixing a plurality of inorganic particles, a plurality of amorphous silicon dioxide particles, and an aqueous solution containing a metallic element, and a step for pressurizing and heating the mixture under conditions of a pressure of 10 to 600 MPa and a temperature of 50 to 300 °C.

### BRIEF DESCRIPTION OF DRAWINGS

[Fig. 1] Fig. 1 is a schematic cross-sectional view of an example of an inorganic structure according to the present embodiment.
[Fig. 2] Fig. 2 is a schematic cross-sectional view of another example of the inorganic structure according to the present embodiment.
[Fig. 3] Fig. 3 is a schematic cross-sectional view for illustrating a method for producing the inorganic structure according to the present embodiment.
[Fig. 4] Fig. 4 is a graph illustrating an XRD pattern of zircon registered in ICSD, XRD patterns of test samples 1-2 and 1-3 in a reference example 1-1, and an XRD pattern of a sample holder.
[Fig. 5] Fig. 5(a) is a scanning electron microscope image of a test sample 1-1 of an example 1-1 magnified 2,000 times. Fig. 5(b) is a scanning electron microscope image of the test sample 1-1 magnified 10,000 times. Fig. 5(c) is a scanning electron microscope image of zircon powder magnified 2,000 times. Fig. 5(d) is a scanning electron microscope image of zircon powder magnified 10,000 times.
[Fig. 6] Fig. 6(a) is a diagram illustrating a reflected electron image at position 1 in the test sample 1-1 of the example 1-1. Fig. 6(b) is a diagram illustrating a reflected electron image at position 2 in the test sample 1-1. Fig. 6(c) is a diagram illustrating a reflected electron image at position 3 in the test sample 1-1.
[Fig. 7] Fig. 7(a) is a diagram illustrating binarized data of the reflected electron image at position 1 in the test sample 1-1 of the example 1-1. Fig. 7(b) is a diagram illustrating binarized data of the reflected electron image at position 2 in the test sample 1-1. Fig. 7(c) is a diagram illustrating the binarized data of the reflected electron image at position 3 in the test sample 1-1.
[Fig. 8] Fig. 8 is a graph illustrating an XRD pattern of magnesia registered in ICSD and an XRD pattern of a test sample 2-1 of an example 2-1.
[Fig. 9] Fig. 9(a) is a scanning electron microscope image of the test sample 2-1 of the example 2-1 magnified 300 times. Fig. 9(b) is a scanning electron microscope image of a magnesia powder magnified 300 times.
[Fig. 10] Fig. 10(a) is a scanning electron microscope image of the test sample 2-1 of the example 2-1 magnified 500 times. Fig. 10(b) is a diagram illustrating an energy dispersive X-ray analysis spectrum in the part of a symbol B in Fig. 10(a). Fig. 10(c) is a diagram illustrating an energy dispersive X-ray analysis spectrum in the part of a symbol C in Fig. 10(a).
[Fig. 11] Fig. 11 is a diagram illustrating a scanning electron microscope image and mapping data of silicon (Si) and magnesium (Mg) when an energy dispersive X-ray analysis was performed on the test sample 2-1 of the example 2-1. Fig. 11(a) is a scanning electron microscope image of the test sample 1 magnified 500 times, Fig. 11(b) is a diagram illustrating mapping data of silicon, and Fig. 11(c) is a diagram illustrating mapping data of magnesium.
[Fig. 12] Fig. 12(a) is a scanning electron microscope image of a binding part in the test sample 2-1 magnified 3,000 times. Fig. 12(b) is a scanning electron microscope image of the part of a symbol D in Fig. 12(a) magnified 10,000 times.
[Fig. 13] Fig. 13(a) is a diagram illustrating a reflected electron image at position 1 in the test sample 2-1 of the example 2-1. Fig. 13(b) is a diagram illustrating a reflected electron image at position 2 in the test sample 2-1. Fig. 13(c) is a diagram illustrating a reflected electron image at position 3 in the test sample 2-1.
[Fig. 14] Fig. 14(a) is a diagram illustrating binarized data of the reflected electron image at position 1 in the test sample 2-1 of the example 2-1. Fig. 14(b) is a diagram illustrating binarized data of the reflected electron image at position 2 in the test sample 2-1. Fig. 14(c) is a diagram illustrating the binarized data of the reflected electron image at position 3 in the test sample 2-1.

### DESCRIPTION OF EMBODIMENTS

Referring to the drawings, a detailed description is given below of an inorganic structure and a method for producing the inorganic structure. Note that dimensional ratios in the drawings are exaggerated for convenience of explanation and are sometimes different from actual ratios.

### [Inorganic structure]

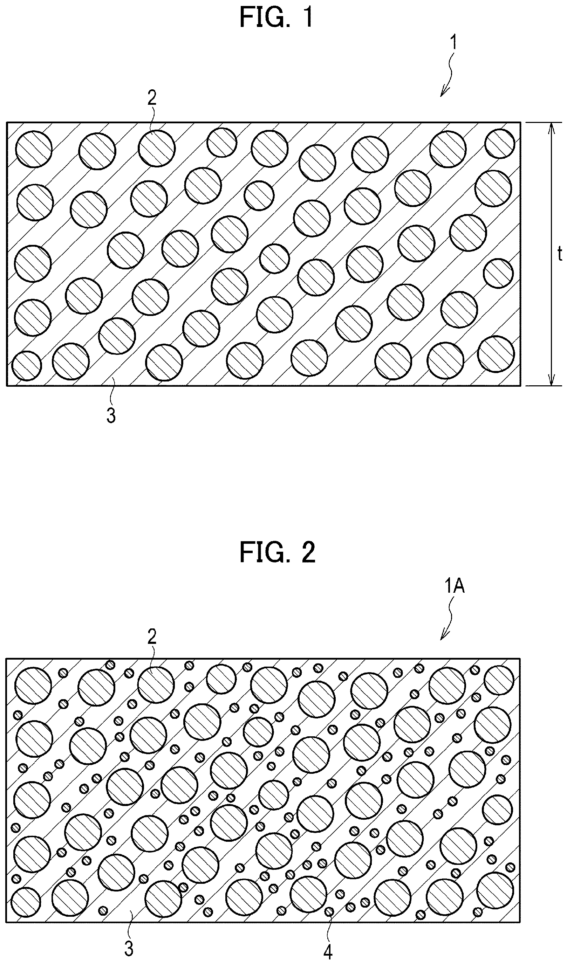

As illustrated in Fig. 1, an inorganic structure 1 according to the present embodiment includes multiple inorganic particles 2. Adjacent inorganic particles 2 are bound to each other through a binding part 3 to form the inorganic structure 1, which is an aggregate of the inorganic particles 2.

The inorganic particles 2 constituting the inorganic structure 1 are made from an inorganic substance, and the inorganic substance contains at least one metallic element selected from the group consisting of an alkali metal, an alkaline earth metal, a transition metal, a base metal, and a semimetal. In this description, the alkaline earth metal includes beryllium and magnesium in addition to calcium, strontium, barium, and radium. The base metal includes aluminum, zinc, gallium, cadmium, indium, tin, mercury, thallium, lead, bismuth, and polonium. The semimetal includes boron, silicon, germanium, arsenic, antimony, and tellurium. Among them, the inorganic substance preferably contains at least one metallic element selected from the group consisting of zirconium, silicon, magnesium, and barium. It is possible for the inorganic particles 2 containing these above-described metallic elements to bind through the binding part 3 using a pressure heating method as described below.

The inorganic substance constituting the inorganic particles 2 is at least one selected from the group consisting of an oxide, a nitride, a hydroxide, an oxide hydroxide, a sulfide, a boride, a carbide, and a halide of at least one of the above-described metallic elements. Note that the oxide of at least one of the above-described metallic elements includes a phosphate, a silicate, an aluminate, and a borate in addition to compounds in which only oxygen is bound to the metallic element. The inorganic substance constituting the inorganic particles 2 may be a complex anionic compound containing the above-described metallic element. The complex anionic compound is a substance in which multiple anions are contained in a single compound, and examples thereof include an acid fluoride, an acid chloride, and an oxynitride. Note that the inorganic substance constituting the inorganic particles 2 is preferably an oxide or a nitride of at least one of the above-described metallic elements. Such an inorganic substance has high stability against oxygen and water vapor in the atmosphere, and thus it is possible to obtain the inorganic structure 1 having excellent chemical stability and excellent reliability.

The inorganic substance constituting the inorganic particles 2 is particularly preferably an oxide. When the inorganic substance is made from an oxide of at least one of the above-described metallic elements, it is possible to obtain the inorganic structure 1 having higher durability compared to the case of a fluoride or a nitride. Note that the oxide of the metallic element is preferably a compound in which only oxygen is bound to the metallic element.

It is preferable that the inorganic particles 2 be made from a simple metal oxide or a complex metal oxide and that the simple metal oxide contain one metallic element and the complex metal oxide contain two or more metallic elements. When the inorganic particles 2 are made from a simple metal oxide or a complex metal oxide of at least one of the above-described metallic elements, the obtained inorganic structure 1 becomes a ceramic that is stable and has various excellent properties. Note that the inorganic particles 2 preferably contain a simple metal oxide or a complex metal oxide as a main component. Specifically, the inorganic particles 2 preferably contain a simple metal oxide or a complex metal oxide at 80 mol% or more, more preferably 90 mol% or more, even more preferably 95 mol% or more.

The inorganic particles 2 are preferably crystalline. That is, it is preferable that the inorganic particles 2 be made from the above-described inorganic substance and further be crystalline particles. When the inorganic particles 2 are crystalline particles, it is possible to obtain the inorganic structure 1 having higher durability compared to the case of amorphous particles. Note that the inorganic particles 2 may be single crystal particles or polycrystalline particles.

The average particle size of the inorganic particles 2 making up the inorganic structure 1 is not limited. However, the average particle size of the inorganic particles 2 is preferably 300 nm or more to 50 µm or less, more preferably 300 nm or more to 30 µm or less, particularly preferably 300 nm or more to 20 µm or less. When the average particle size of the inorganic particles 2 is within these ranges, the inorganic particles 2 are strongly bound to each other, which makes it possible to increase the strength of the inorganic structure 1. When the average particle size of the inorganic particles 2 is within these ranges, the percentage of pores present inside the inorganic structure 1 is 20% or less as described below, which makes it possible to increase the strength of the inorganic structure 1. In this description, unless otherwise noted, the "average particle size" is a value calculated as an average of the particle sizes observed in several to several tens of visual fields using observation means such as a scanning electron microscope (SEM) or a transmission electron microscope (TEM).

The shape of the inorganic particles 2 is not limited but can be spherical, for example. The inorganic particles 2 may have a whisker shape (needle shape) or a scale shape. Particles having a whisker shape or a scale shape have a higher degree of contact with other particles and with the binding part 3 compared to the particles having a spherical shape, which makes it possible to increase the strength of the entire inorganic structure 1.

The inorganic structure 1 according to the present embodiment includes the binding part 3, which binds the multiple inorganic particles 2 together. Since adjacent inorganic particles 2 are bound through the binding part 3, the inorganic particles 2 are bound to each other in three dimensions, and thus it is possible to obtain a bulk body having high mechanical strength.

The binding part 3 contains an amorphous compound containing silicon, oxygen, and one or more metallic elements. The metallic elements contained in the binding part 3 are each at least one selected from the group consisting of an alkali metal, an alkaline earth metal, a transition metal, a base metal, and a semimetal. As described below, it is possible to obtain the inorganic structure 1 by heating and pressurizing a mixture obtained by mixing inorganic particles, amorphous silicon dioxide particles, and an aqueous solution containing a metallic element. At this time, the silicon dioxide particles react with the aqueous solution containing a metallic element to form an amorphous compound containing silicon, oxygen, and a metallic element. Thus, the binding part 3 contains an amorphous compound containing silicon, oxygen, and one or more metallic elements. Note that it is preferable that the binding part 3 contain an amorphous compound as a main component. Specifically, the binding part 3 preferably contains the amorphous compound at 50 mol% or more, more preferably 70 mol% or more, even more preferably 90 mol% or more.

The binding part 3 is preferably in direct contact with the inorganic particles 2. It is preferable that the binding part 3 cover at least part of the surface of each of the inorganic particles 2, and it is more preferable that the binding part 3 cover the entire surface of each of the inorganic particles 2. Thus, the inorganic particles 2 and the binding part 3 are firmly bound, and thus it is possible to obtain the inorganic structure 1 having excellent density and mechanical strength.

As illustrated in Fig. 2, in an inorganic structure 1A, the binding part 3 may include fine particles 4 having an average particle size of 100 nm or less. Since the binding part 3 contains multiple fine particles 4, the binding part 3 has a denser structure, and thus it is possible to increase the strength of the inorganic structure 1A.

As described above, the binding part 3 is formed through a reaction of amorphous silicon dioxide particles with an aqueous solution containing a metallic element due to heating and pressurization. Thus, particulate matter derived from the silicon dioxide particles may be included inside the binding part 3. As described below, the particle size of the amorphous silicon dioxide particles is preferably 100 nm or less. Thus, the binding part 3 may contain the fine particles 4 derived from the silicon dioxide particles and having an average particle size of 100 nm or less. Note that the particle size of the fine particles 4 included in the binding part 3 can be measured using a scanning electron microscope or a transmission electron microscope.

The fine particles 4 included in the binding part 3 may be particles made from an amorphous compound containing silicon, oxygen, and one or more metallic elements. The fine particles 4 may be particles made from a crystalline compound containing silicon, oxygen, and one or more metallic elements. Note that the fine particles 4 may contain silicon dioxide that did not react with an aqueous solution containing a metallic element.

Note that it is preferable that the binding part 3 contain substantially no alkali metallic element, B, V, Te, P, Bi, Pb, and Zn. It is preferable that the binding part 3 contain substantially no Ca, Sr, and Ba. In this description, "the binding part contains substantially no alkali metallic element, B, V, Te, P, Bi, Pb, and Zn" means that the binding part 3 is not made to contain an alkali metallic element, B, V, Te, P, Bi, Pb, and Zn on purpose. Thus, when one or more of an alkali metallic element, B, V, Te, P, Bi, Pb, and Zn are mixed as unavoidable impurities in the binding part 3, the condition in which "the binding part contains substantially no alkali metallic element, B, V, Te, P, Bi, Pb, and Zn" is satisfied. In a similar manner, in this description, "the binding part contains substantially no Ca, Sr, and Ba" means that the binding part 3 is not made to contain Ca, Sr, and Ba on purpose. Thus, when one or more of Ca, Sr, and Ba are mixed as inevitable impurities in the binding part 3, the condition in which "the binding part contains substantially no Ca, Sr, and Ba" is satisfied.

It is preferable that the inorganic particles 2 and the binding part 3 contain the same metallic element in the inorganic structure 1, 1A. As described above, it is possible to obtain the inorganic structure 1, 1A by heating and pressurizing a mixture made from the inorganic particles 2, amorphous silicon dioxide particles, and an aqueous solution containing a metallic element. The silicon dioxide particles react with an aqueous solution containing a metallic element to form the binding part 3 containing a compound containing silicon, oxygen, and a metallic element. Here, when the inorganic particles 2 and the aqueous solution contain the same metallic element, it becomes easier for the metallic elements to diffuse into each other during heating and pressurization. Consequently, the inorganic particles 2 and the binding part 3 come into contact and bind easily, and it is possible to obtain the inorganic structure 1, 1A, which is strong.

It is preferable that the volume ratio of the inorganic particles 2 be larger than that of the binding part 3 in the inorganic structure 1, 1A. Here, the obtained inorganic structure 1, 1A is likely to utilize properties of the inorganic particles 2. Specifically, when the inorganic particles 2 are made from an inorganic compound having low thermal conductivity, it is possible to improve the thermal insulation of the entire inorganic structure 1, 1A by making the volume ratio of the inorganic particles 2 larger than that of the binding part 3. In contrast, when the inorganic particles 2 are made from an inorganic compound having high thermal conductivity, it is possible to improve the thermal conductivity of the entire inorganic structure 1, 1A by making the volume ratio of the inorganic particles 2 larger than that of the binding part 3.

The binding part 3 preferably further contains a crystalline compound containing a metallic element constituting an amorphous compound. As described above, the binding part 3 contains an amorphous compound containing silicon, oxygen, and one or more metallic elements. Thus, the crystal structure of the binding part 3 is at least partially amorphous. However, it is preferable that the binding part 3 contain a crystalline compound in addition to the amorphous compound, and it is further preferable that the metallic element contained in the crystalline compound be the same as that contained in the amorphous compound. When the binding part 3 further contains the crystalline compound, it is possible to enhance the chemical stability of the inorganic structure 1, 1A compared to the case where the binding part 3 is made from only an amorphous compound.

As described above, in the inorganic structure 1, 1A, the inorganic particles 2 are preferably made from an oxide of at least one metallic element selected from the group consisting of an alkali metal, an alkaline earth metal, a transition metal, a base metal, and a semimetal. Specifically, examples of the inorganic particles 2 include particles made from zirconium silicate (zircon, ZrSiO₄), magnesium oxide (magnesia, MgO), or barium zirconate (BaZrO₃).

Here, when the inorganic particles 2 are made from zirconium silicate, the binding part 3 preferably contains an amorphous compound containing silicon, oxygen, and zirconium. Note that in the amorphous compound, the ratio of silicon to zirconium is not limited. When the binding part 3 includes the fine particles 4, the fine particles 4 may be particles made from the amorphous compound containing silicon, oxygen, and zirconium, or particles made from crystalline zirconium silicate. The fine particles 4 may contain silica derived from silicon dioxide particles, which are the raw material. The binding part 3 may contain zirconium silicate as a crystalline compound.

When the inorganic particles 2 are made from magnesium oxide, the binding part 3 preferably contains an amorphous compound containing silicon, oxygen, and magnesium. Note that in the amorphous compound, the ratio of silicon to magnesium is not limited. When the binding part 3 contains fine particles 4, the fine particles 4 may be particles made from an amorphous compound containing silicon, oxygen, and magnesium, or particles made from crystalline magnesium silicate. The fine particles 4 may contain silica derived from silicon dioxide particles, which are the raw material. The binding part 3 may contain magnesium silicate as a crystalline compound.

When the inorganic particles 2 are made from barium zirconate, the binding part 3 preferably contains an amorphous compound containing silicon, oxygen, and barium. Note that in the amorphous compound, the ratio of silicon to barium is not limited. When the binding part 3 contains the fine particles 4, the fine particles 4 may be particles made from an amorphous compound containing silicon, oxygen, and barium, or particles made from crystalline barium zirconate. The fine particles 4 may contain silica derived from silicon dioxide particles, which are the raw material. The binding part 3 may contain barium zirconate as a crystalline compound.

Zirconium silicate has a thermal conductivity of about 1.3 W/m·K, which is known to be low among ceramic materials. Thus, using particles made from zirconium silicate as the inorganic particles 2 and using an amorphous compound containing silicon, oxygen, and zirconium as the binding part 3 make it possible to obtain the inorganic structure 1, 1A having excellent thermal insulation in addition to mechanical strength. Magnesium oxide has a thermal conductivity of about 60 W/m·K, which is known to be high. Thus, using particles made from magnesium oxide as the inorganic particles 2 and using an amorphous compound containing silicon, oxygen, and magnesium as the binding part 3 make it possible to obtain the inorganic structure 1, 1A having excellent thermal conductivity in addition to mechanical strength.

As described above, the binding part 3 is formed through the reaction of amorphous silicon dioxide particles with an aqueous solution containing a metallic element due to heating and pressurization, resulting in a dense phase. Pores may be present in at least one location of inside the binding part 3 or between the binding part 3 and the inorganic particles 2.

The porosity in the cross section of the inorganic structure 1, 1A is preferably 20% or less. That is, when the cross section of the inorganic structure 1, 1A is observed, the average value of the percentage of pores per unit area is preferably 20% or less. When the porosity is 20% or less, the proportion of the inorganic structure 1, 1A in which the inorganic particles 2 are bound to each other by the binding part 3 increases, and thus the inorganic structure 1, 1A become denser and has increased strength. This makes it possible to improve the machinability of the inorganic structure 1, 1A. When the porosity is 20% or less, the occurrence of cracks starting from pores in the inorganic structure 1, 1A is prevented, and thus it is possible to increase the bending strength of the inorganic structure 1, 1A. Note that the porosity in the cross section of the inorganic structure 1, 1A is preferably 10% or less, more preferably 8% or less, even more preferably 5% or less. The lower the porosity in the cross section of the inorganic structure 1, 1A, the more cracks starting from pores are prevented, which makes it possible to increase the strength of the inorganic structure 1, 1A.

In this description, the porosity is determined as follows. First, a cross section of the inorganic structure 1, 1A is observed to discriminate among the inorganic particles 2, the binding part 3, and pores. Then, the unit area and the area of the pores in that unit area are measured to obtain the percentage of the pores per unit area, which is defined as the porosity. Note that it is more preferable to obtain the percentage of pores per unit area at multiple points in a cross section of the inorganic structure 1, 1A and then to define the average value of the percentage of the pores per unit are as the porosity. When a cross section of the inorganic structure 1, 1A is observed, an optical microscope, a scanning electron microscope (SEM), and a transmission electron microscope (TEM) are usable. The unit area and the area of pores in that unit area may be measured through binarizing an image observed using a microscope.

The size of pores inside the inorganic structure 1, 1A is not limited but is preferably as small as possible. When the size of pores is small, cracks starting from pores are prevented, which makes it possible to increase the strength of the inorganic structure 1, 1A and to improve the machinability of the inorganic structure 1, 1A. Note that the size of pores in the inorganic structure 1, 1A is preferably 5 µm or less, more preferably 1 µm or less, more preferably 100 nm or less. The size of pores inside the inorganic structure 1, 1A is determined by observing a cross section of the inorganic structure 1, 1A using a microscope in the same manner as the porosity described above.

It is sufficient for the inorganic structure 1, 1A to have a structure in which the inorganic particles 2 are bound to each other through the binding part 3. Thus, as long as the inorganic structure 1, 1A has such a structure, its shape is not limited. The inorganic structure 1, 1A can have, for example, a plate shape, a film shape, a rectangular shape, a lumpy shape, a rod shape, or a spherical shape. When the inorganic structure 1, 1A has a plate shape or a film shape, its thickness t is not limited but can be 50 µm or more, for example. The inorganic structure 1, 1A according to the present embodiment is formed by using a pressure heating method as described below. It is thus possible to easily obtain the inorganic structure 1, 1A having a large thickness. Note that the thickness t of the inorganic structure 1, 1A may be 500 µm or more, 1 mm or more, or 1 cm or more. The upper limit of the thickness t for the inorganic structure 1, 1A is not limited but can be 50 cm, for example.

In the inorganic structure 1, 1A, the multiple inorganic particles 2 are bound to each other through the binding part 3 and thus are not bound by an organic binder made from an organic compound, nor by an inorganic binder other than the binding part 3. Thus, the inorganic structure 1, 1A retains the characteristics of the inorganic particles 2 and the binding part 3. For example, when the inorganic particles 2 and the binding part 3 are made from an inorganic material having high thermal conductivity, the obtained inorganic structure 1, 1A also has excellent thermal conductivity. When the inorganic particles 2 and the binding part 3 are made from an inorganic material having high electrical insulation, the obtained inorganic structure 1, 1A also has excellent electrical insulation.

As described above, the inorganic structure 1, 1A according to the present embodiment includes the multiple inorganic particles 2 and the binding part 3 that covers the surface of each of the inorganic particles 2 and binds the inorganic particles 2 together. The binding part 3 contains an amorphous compound containing silicon, oxygen, and one or more metallic elements, and fine particles 4 having an average particle size of 100 nm or less. In the inorganic structure 1, 1A, the multiple inorganic particles 2 are bound through the binding part 3 having high density. It is thus possible to obtain the inorganic structure 1, 1A having excellent density and mechanical strength.

As illustrated in Figs. 1 and 2, the inorganic structure 1, 1A according to the present embodiment can be a structure in which only the inorganic particles 2 are bound through the binding part 3. However, as described below, the inorganic structure 1, 1A is obtained by being pressurized while being heated at a temperature of 50 to 300 °C, which makes it possible to add a member having low heat resistance to the inorganic structure 1, 1A. Specifically, the inorganic structure 1, 1A may contain organic matter or resin particles in addition to the inorganic particles 2 and the binding part 3. A member added to the inorganic structure 1, 1A is not limited to one having low heat resistance, such as organic matter, and the inorganic structure 1, 1A may include particles made from the metal particles or an inorganic compound other than inorganic particles 2 and the binding part 3.

### [Method for producing inorganic structure]

Next, a method for producing the inorganic structure 1, 1A is described. It is possible to produce an inorganic structure by performing a step of mixing multiple inorganic particles, multiple silicon dioxide particles, which are amorphous, and an aqueous solution containing a metallic element to obtain a mixture and a step of pressurizing and heating the mixture. Note that, hereinafter, "an aqueous solution containing a metallic element" is also referred to as "a metal-containing aqueous solution".

Specifically, the mixture is prepared by first mixing a powder of inorganic particles, silicon dioxide particles, and a metal-containing aqueous solution. As described above, the inorganic particles preferably contain at least one metallic element selected from the group consisting of an alkali metal, an alkaline earth metal, a transition metal, a base metal, and a semimetal, and further are preferably made from at least one selected from the group consisting of an oxide, a nitride, a hydroxide, a sulfide, a boride, a carbide, and halide of the above-described metallic elements.

The silicon dioxide particles are particles made from amorphous silicon dioxide. The silicon dioxide particles are preferably fumed particles, that is, fumed silica. Fumed silica is constituted by amorphous silica particles having a primary particle size of about 5 to 50 nm. The fumed silica is constituted by particles produced through combustion hydrolysis of silicon tetrachloride, and bulky secondary particles are formed through aggregation and agglomeration of primary particles. Thus, the fumed silica is highly reactive with a metal-containing aqueous solution, and it is possible to easily form an amorphous compound containing silicon, oxygen, and a metallic element.

An aqueous solution containing a metallic element (metal-containing aqueous solution) is an aqueous solution containing a metallic element that can be contained in the binding part 3, as ions. Similar to the inorganic particles, the metallic element contained in the metal-containing aqueous solution is preferably at least one selected from the group consisting of an alkali metal, an alkaline earth metal, a transition metal, a base metal, and a semimetal. Note that a solvent for dissolving the metallic element is preferably pure water or ion-exchanged water. In addition to water, the solvent may contain an acidic or alkaline substance, or an organic solvent, such as alcohol.

Specifically, when an inorganic structure is prepared in which the inorganic particles are made from ZrSiO₄ and the binding part is made from an amorphous compound containing Si, O, and Zr, it is possible to use zirconium silicate particles for the inorganic particles and to use a zirconium oxyacetate aqueous solution for the metal-containing aqueous solution. When an inorganic structure is prepared in which the inorganic particles are made from MgO and the binding part is made from an amorphous compound containing Si, O, and Mg, it is possible to use magnesium oxide particles for the inorganic particles and to use a magnesium acetate aqueous solution for the metal-containing aqueous solution. When an inorganic structure is prepared in which the inorganic particles are made from BaZrO₃ and the binding part is made from an amorphous compound containing Si, O, and Ba, it is possible to use barium zirconate particles for the inorganic particles and to use a barium acetate aqueous solution for the metal-containing aqueous solution.

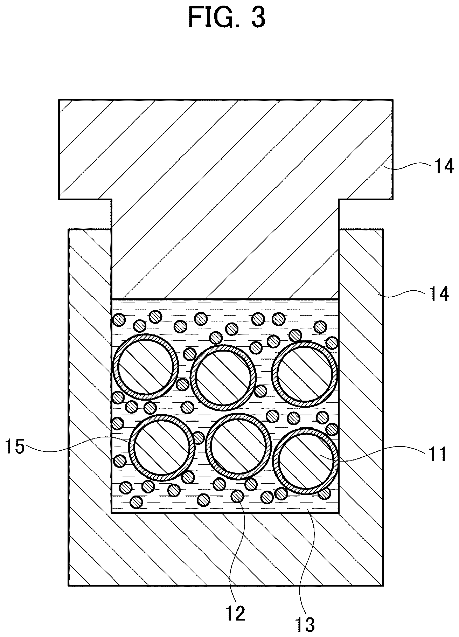

Then, as illustrated in Fig. 3, the mixture obtained by mixing inorganic particles 11, silicon dioxide particles 12, and a metal-containing aqueous solution 13 is filled inside a die 14. After being filled with the mixture, the die 14 is heated as necessary. Then, applying pressure to the mixture inside the die 14 causes the inside of the die 14 to be a high-pressure state. At this time, since the silicon dioxide particles 12 are amorphous and highly reactive, the silicon dioxide particles 12 and the metal-containing aqueous solution 13 react to form the binding part 3 containing silicon, oxygen, and a metallic element.

Here, when fumed silica is used as the silicon dioxide particles 12, the particle size of the fumed silica is at the nano-level, and thus the particles are filled without gaps among the inorganic particles 11. Thus, the obtained binding part 3 has a dense structure and enables the inorganic particles 11 to be tightly bound to each other.

When the inorganic particles 11 and the metal-containing aqueous solution 13 contain the same metallic element, it becomes easier for the metallic elements to diffuse into each other by heating and pressurizing the above-described mixture. This facilitates the formation of a compound 15 containing silicon, oxygen, and a metallic element on the surface of each of the inorganic particles 11, as illustrated in Fig. 3. Specifically, when zirconium silicate particles are used as the inorganic particles 11 and zirconium oxyacetate aqueous solution is used as the metal-containing aqueous solution 13, zirconium silicate is more likely to be formed on the surface of each of the inorganic particles 11. Thus, the obtained binding part 3 tightly binds the inorganic particles 11 while covering them, making it possible to increase the mechanical strength of the inorganic structures 1, 1A.

Then, taking out the molded body from the inside of the die provides the inorganic structure 1, 1A in which the multiple inorganic particles 2 are bound to each other through the binding part 3.

Note that the heating and pressurizing conditions for the mixture obtained by mixing the inorganic particles 11, the silicon dioxide particles 12, and the metal-containing aqueous solution 13 are not limited as long as the reaction of the silicon dioxide particles 12 with the metal-containing aqueous solution 13 proceeds. For example, it is preferable to pressurize the above-described mixture at a pressure of 10 to 600 MPa while heating at a temperature of 50 to 300 °C. Note that the temperature for heating the mixture is more preferably 80 to 250 °C, more preferably 100 to 200 °C. The pressure for pressurizing the mixture is more preferably 50 to 600 MPa, even more preferably 200 to 600 MPa.

Through the heating and pressurizing step described above, the amorphous silicon dioxide particles 12 may completely react with the metal-containing aqueous solution 13 to form a compound containing silicon, oxygen, and a metallic element. The silicon dioxide particles 12 may not completely react with the metal-containing aqueous solution 13 to remain as silicon dioxide in the binding part 3.

Since the binding part 3 is formed through the reaction of the silicon dioxide particles 12 with the metal-containing aqueous solution 13, the binding part 3 may include the fine particles 4 derived from the silicon dioxide particles and having an average particle size of 100 nm or less. Note that the fine particles 4 contain at least silicon, oxygen, and a metallic element and may contain silicon dioxide that did not react with the metal-containing aqueous solution 13.

As described above, it is possible to obtain the inorganic structure 1, 1A by pressurizing and heating the mixture obtained by mixing the inorganic particles 11, the silicon dioxide particles 12, and the metal-containing aqueous solution 13 at a pressure of 10 to 600 MPa and at a temperature of 50 to 300 °C. Through such a heating and pressurizing step, it is possible to form the binding part 3 containing an amorphous compound. By increasing the heating and pressurizing time of the above-described mixture, part of the amorphous compound crystallizes. Thus, when the binding part 3 is made to further contain a crystalline compound containing a metallic element constituting the amorphous compound, it is preferable to lengthen the heating and pressurizing time of the mixture of the inorganic particles, the silicon dioxide particles, and the metal-containing aqueous solution.

In the producing method according to the present embodiment, as the amorphous silicon dioxide particles, it is preferable to use fumed particles, that is, fumed silica. Here, alumina (Al₂O₃) and titania (TiO₂) are also present as fumed particles. Thus, at least one of fumed alumina or fumed titania may be further mixed into the mixture obtained by mixing the inorganic particles 11, the silicon dioxide particles 12, and the metal-containing aqueous solution 13. This causes the fumed alumina and/or the fumed titania to react with the metal-containing aqueous solution 13 and enables the reaction product to be included in the binding part 3.

Here, a possible method for forming an aggregate of inorganic particles is to press only powder of inorganic particles. However, even if the powder of inorganic particles is put into a die and pressurized at normal temperature, the inorganic particles are unlikely to react with each other, and it is difficult to firmly bind the particles together. Thus, the obtained compact has many pores and lacks mechanical strength.

Another possible method for forming an aggregate of inorganic particles is to press only powder of the inorganic particles to form a compact and then to calcine the compact at a high temperature (for example, 1700 °C or higher). When a compact of inorganic particles is calcined at a high temperature, the inorganic particles are sintered together to form a structure. However, even when the compact of inorganic particles is calcined at a high temperature, the inorganic particles are unlikely to sinter with each other, and thus the obtained structure has many pores and lacks mechanical strength. When inorganic particles are calcined at a high temperature, a precise temperature control is necessary, which increases the manufacturing cost.

In contrast, in the producing method according to the present embodiment, a mixture obtained by mixing the inorganic particles 11, the amorphous silicon dioxide particles 12, and the metal-containing aqueous solution 13 is heated and pressurized, and thus it is possible to obtain a dense and strong structure. In the producing method according to the present embodiment, the structure is obtained by being pressurized while being heated at the temperature of 50 to 300 °C, which makes it possible to eliminate precise temperature control and to reduce the manufacturing cost.

As described above, the method for producing the inorganic structure 1, 1A according to the present embodiment includes a step of obtaining a mixture by mixing the multiple inorganic particles 11, the multiple silicon dioxide particles 12, which are amorphous, and the aqueous solution 13 containing a metallic element. The producing method further includes a step of pressurizing and heating the mixture under conditions of a pressure of 10 to 600 MPa and a temperature of 50 to 300 °C. Thus, the producing method according to the present embodiment makes it possible to produce an inorganic structure having high density through a simple method.

### [Member provided with inorganic structure]

Next, a member provided with the inorganic structure 1 is described. As described above, the inorganic structure 1 is formable into a plate shape having a large thickness and also has excellent chemical stability as it is dense. The inorganic structure 1 has high mechanical strength, and thus can be cut in the same manner as a general ceramic member and can undergo a surface treatment. Thus, the inorganic structure 1 can be suitably used as a building material. The building material is not limited, and possible examples include an exterior wall material (siding), a roof material, and the like. Road materials and outer groove materials are also possible examples of the building material.

It is also possible to suitably use the inorganic structure 1 as an electronic equipment material. Possible examples of the electronic equipment material include structural materials, heat-resistant materials, insulating materials, heat dissipation materials, heat insulating materials, sealing materials, circuit boards, and optical materials.

The present embodiment is described below in more detail with reference to examples and reference examples, but the present embodiment is not limited to these examples.

### [EXAMPLE 1]

### [Preparation of test samples]

### (Example 1-1)

First, zircon powder (zirconium silicate powder (ZrSiO₄), manufactured by FUJIFILM Wako Pure Chemical Corporation) and amorphous silica powder (fumed silica, AEROSIL (registered trademark) manufactured by NIPPON AEROSIL CO., LTD.) were prepared. Then, an amount of 0.5 g of the zircon powder and an amount of 0.1778 g of the silica powder were mixed with acetone using an agate mortar and an agate pestle to obtain a mixed powder. Note that in this mixed powder, the volume ratio (vol%) of the zircon powder to the silica powder was 57 : 43 (ZrSiO₄ : SiO₂).

An amount of 2 g of zirconium oxyacetate powder (ZrO(CH₃COO)₂, manufactured by Mitsuwa Chemical Co., Ltd) was dissolved in an amount of 3 ml of ion-exchanged water to obtain a zirconium oxyacetate aqueous solution.

Next, the entire amount of the mixed powder was put in a cylindrical die (ϕ10 mm) for molding having an internal space. Then, an amount of 400 µl of the zirconium oxyacetate aqueous solution was added in the die for molding and was mixed using a plastic spatula. Note that in the mixed powder containing the zirconium oxyacetate aqueous solution, SiO₂ was 250 mol% relative to Zr (CH₃COO)₂.

The mixed powder containing the zirconium oxyacetate aqueous solution was then heated and pressurized under conditions of 150 °C, 400 MPa, and 60 minutes. Thus, a test sample 1-1 according to the present example, which is cylindrical, was obtained.

### (Reference example 1-1)

Test samples without zircon powder were prepared to confirm crystal structures. First, an amount of 0.2 g of the same silica powder as in the example 1-1 was put in a cylindrical die (ϕ10 mm) having an internal space. Then, an amount of 300 µl of the zirconium oxyacetate aqueous solution prepared in the example 1-1 was added in the die and was mixed using a plastic spatula.

Then, the silica powder containing the zirconium oxyacetate aqueous solution was heated and pressurized under conditions of 150 °C, 400 MPa, and 60 minutes, and a test sample 1-2 containing no zircon powder was obtained. The silica powder containing the zirconium oxyacetate aqueous solution was heated and pressurized under conditions of 150 °C, 400 MPa, and 240 minutes, and a test sample 1-3 containing no zircon powder was obtained.

The test sample 1-2, which was prepared with a heating and pressurizing time of 60 minutes, was prepared under the same conditions as the test sample 1-1 of the example 1-1 except that it did not contain zircon powder. Thus, the test sample 1-2 of the reference example 1-1 is considered to have the same crystal structure as the compound containing silicon (silicon-containing compound) of the test sample 1-1 of the example 1-1. It is considered that the test sample 1-3 without zircon powder, which was prepared with a heating and pressurizing time of 240 minutes, has the same crystal structure as the silicon-containing compound of the test sample 1-1 of the example 1-1 with a heating and pressurizing time of 240 minutes.

### [Evaluation of test samples]

### (Crystal structure analysis)

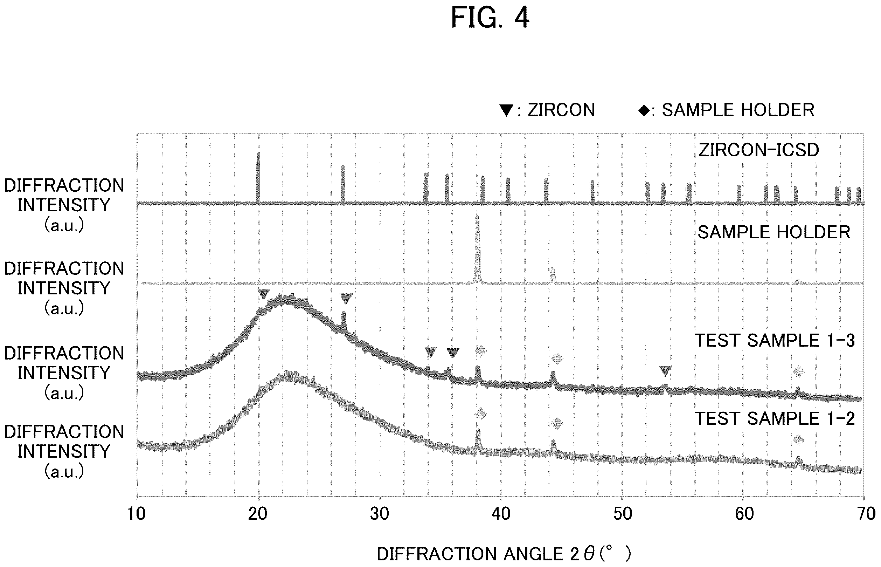

A powder X-ray diffraction (XRD) instrument was used to measure XRD patterns of powders obtained by pulverizing the test samples 1-2 and 1-3. Fig. 4 illustrates an XRD pattern of zircon registered in ICSD, XRD patterns of the test samples 1-2 and 1-3 without zircon powder, and an XRD pattern of a sample holder.

As illustrated in Fig. 4, the silicon-containing compound contained in the test sample 1-1 of the example 1-1 is considered to be amorphous because the test sample 1-2 with a heating and pressurizing time of 60 minutes did not indicate crystalline peaks. That is, the silicon-containing compound that makes up the binding part 3 in the test sample 1-1 is considered to be amorphous. In contrast, in the case of the test sample 1-3 with a heating and pressurizing time of 240 minutes, it is considered that the silicon-containing compound is made from crystalline zircon and an amorphous compound because it includes zircon peaks. That is, when the heating and pressurizing time of the test sample 1-1 is 240 minutes, the silicon-containing compound making up the binding part 3 is considered to be made from crystalline zircon and an amorphous compound.

### (Structure observation)

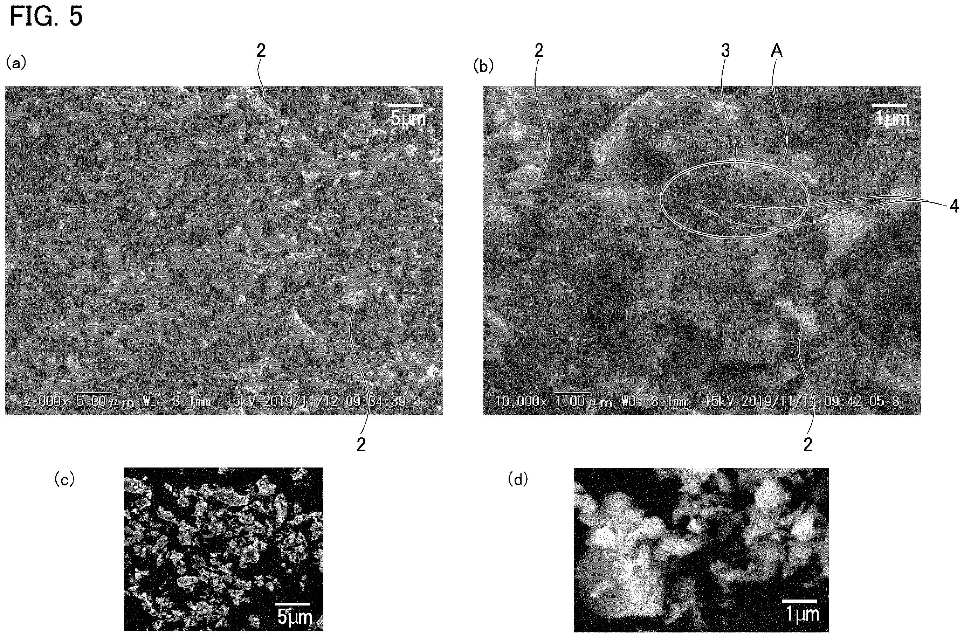

The cross section of the cut cylindrical test sample 1-1 prepared in the example 1-1 was observed using a scanning electron microscope (SEM). Note that the observation surface of the test sample 1-1 was sputtered with gold. Fig. 5(a) illustrates an SEM image of the test sample 1-1 magnified 2,000 times, and Fig. 5(b) illustrates an SEM image of the test sample 1-1 magnified 10,000 times. For reference, Fig. 5(c) illustrates an SEM image of zircon powder magnified 2,000 times, and Fig. 5(d) illustrates an SEM image of zircon powder magnified 10,000 times.

From the SEM image in Fig. 5(a), it can be confirmed that particles of the zircon powder (inorganic particles 2) are bound to each other through the binding part 3 in the test sample 1-1 of the example 1-1. A dense structure can be confirmed in the test sample 1-1. As indicated by the symbol A in Fig. 5(b), it can be confirmed that fine particles 4 with a particle size of 100 nm or less are included inside the binding part 3.

### (Porosity measurement)

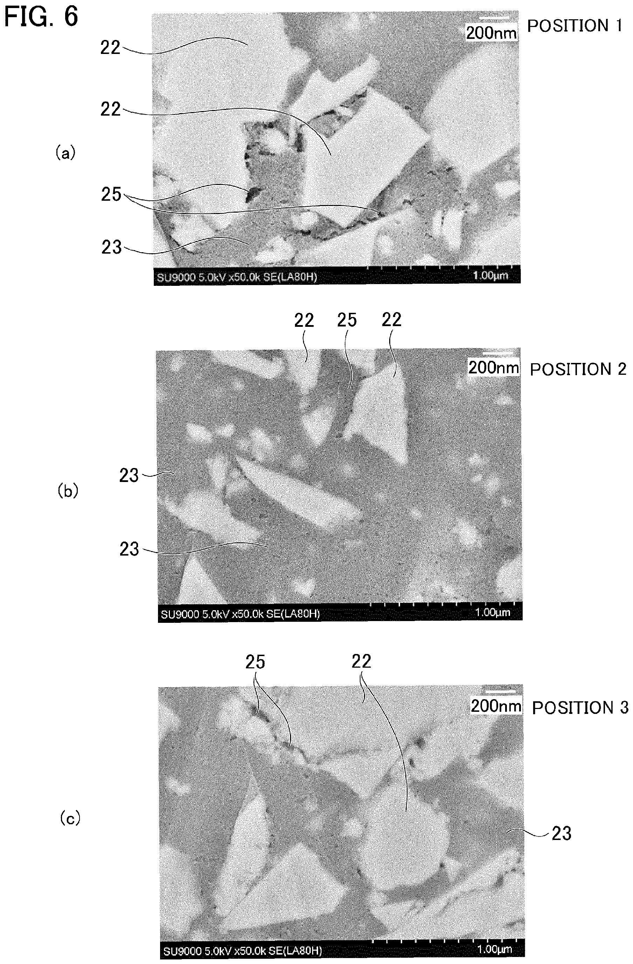

First, cross section polisher processing (CP processing) was applied to the cross section of the test sample 1-1 of the example 1-1, which is cylindrical. Then, using a scanning electron microscope (SEM), a reflected electron image was observed at a magnification of 50,000 times on the cross section of the test sample 1-1. Figs. 6(a), 6(b), and 6(c) illustrate reflected electron images obtained by observing three points (positions 1 to 3) in the cross section of the test sample 1-1. In the observed reflected electron images, a white part 22 is zircon, a gray part 23 is a silicon-containing compound, and black parts 25 are pores.

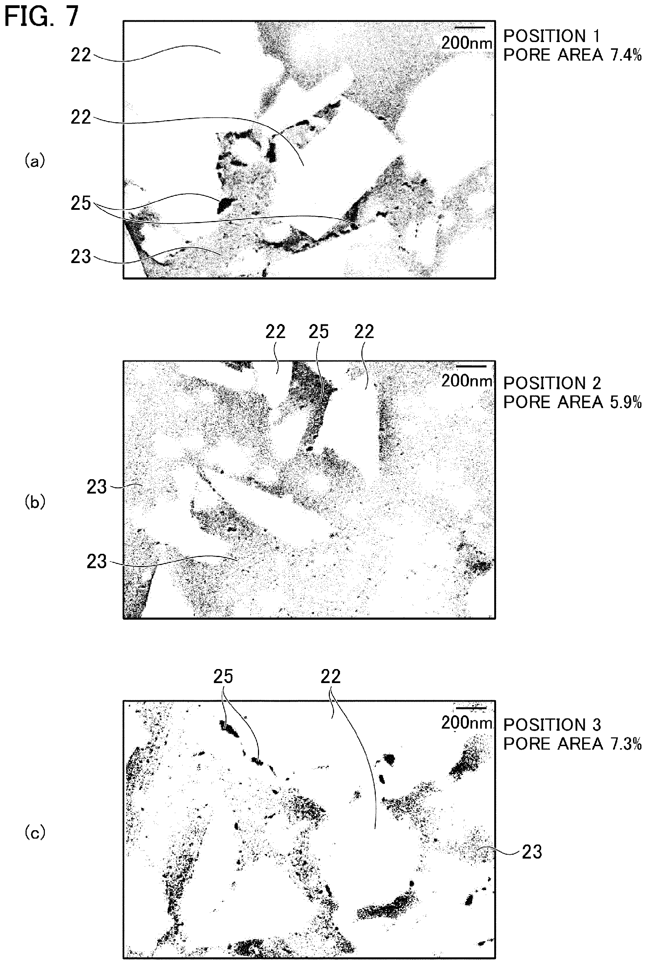

Next, through binarizing the SEM images of the three fields, the pore portions were clarified. The binarized images of the reflected electron images of Figs. 6(a), 6(b), and 6(c) are illustrated in Figs. 7(a), 7(b), and 7(c), respectively. Then, the area percentage of the pore portion was calculated from the binarized image, and the average value was taken as the porosity. Specifically, in Fig. 7(a), the area percentage of the pore portion at position 1 was 7.4%. In Fig. 7(b), the area percentage of the pore portion at position 2 was 5.9%. In Fig. 7(c), the area percentage of the pore at position 3 was 7.3%. Thus, the porosity of the test sample 1-1 prepared this time was 6.8%, which is the average value of the area percentage of the pore portion at positions 1 to 3.

### [Example 2]

### [Preparation of test samples]

First, a magnesia powder (MgO, manufactured by Ube Material Industries, Ltd.) and an amorphous silica powder (fumed silica, manufactured by NIPPON AEROSIL CO., LTD., AEROSIL) were prepared. Then, the magnesia powder and the silica powder were mixed in the proportions in Table 1 with acetone using an agate mortar and an agate pestle to obtain a mixed powder for each example. Note that in the mixed powder of an example 2-1, the volume ratio (vol%) of the magnesia powder (MgO) to the silica powder (SiO₂) was 62 : 38 (MgO : SiO₂).

An amount of 4 g of magnesium acetate tetrahydrate powder (Mg(CH₃COO)₂ ·4H₂O, manufactured by FUJIFILM Wako Pure Chemical Corporation) was dissolved in an amount of 6 ml of ion-exchanged water to obtain a magnesium acetate aqueous solution.

**[Table 1]**

| | Magnesia | Silica | Magnesium acetate aqueous solution |
|---|---|---|---|
| Example 2-1 | 0.2g | 0.0747g | 160µl |
| Example 2-2 | 0.2g | 0.02241g | 96µl |
| Example 2-3 | 0.2g | 0.0075g | 96µl |

Next, the mixed powder of each example was put in a cylindrical die (ϕ10 mm) for molding having an internal space. Then, the magnesium acetate aqueous solution in an amount in Table 1 was added in the die for molding and was mixed using a plastic spatula. Note that in the mixed powder containing the magnesium acetate aqueous solution in the example 2-1, SiO₂ was 250 mol% relative to Mg (CH₃COO)₂.

Then, the mixed powder containing the magnesium acetate aqueous solution was heated and pressurized under conditions of 150 °C, 400 MPa, and 30 minutes. This resulted in a test sample 2-1 of the example 2-1, a test sample 2-2 of an example 2-2, and a test sample 2-3 of an example 2-3, which were each cylindrical.

### [Evaluation of test samples]

### (Crystal structure analysis)

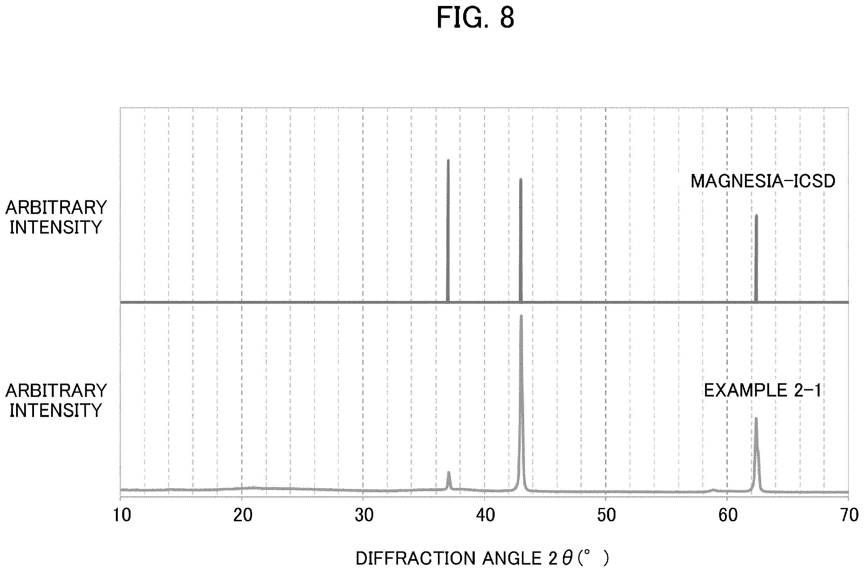

A powder X-ray diffraction (XRD) instrument was used to measure an XRD pattern of a powder obtained by pulverizing the test sample 2-1. Fig. 8 illustrates an XRD pattern of magnesia registered in ICSD, and an XRD pattern of the test sample 2-1 of the example 2-1.

As illustrated in Fig. 8, the XRD pattern of the test sample 2-1 of the example 2-1 was found to have peaks at the same positions as magnesia registered in the ICSD and to have magnesia as the main phase. Since no other significant peaks were observed, the crystal structure of magnesium silicate formed by the reaction of a silica powder with a magnesium acetate aqueous solution was found to be amorphous. That is, the crystal structure of the magnesium silicate making up the binding part 3 was found to be amorphous.

### (Structure observation)

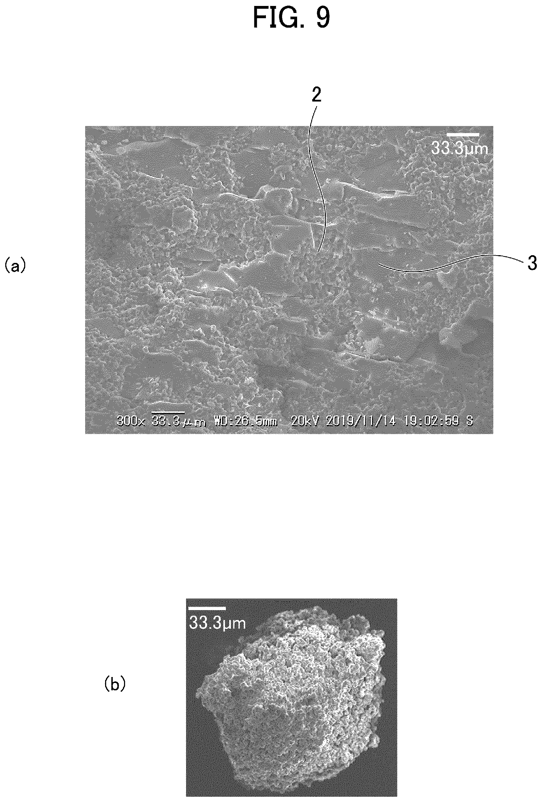

The cross section of the cut cylindrical test sample 2-1 prepared in the example 2-1 was observed using a scanning electron microscope (SEM). Note that the observation surface of the test sample 2-1 was sputtered with gold. Fig. 9(a) illustrates an SEM image of the test sample 2-1 magnified 300 times. For reference Fig. 9(b) illustrates an SEM image of a magnesia powder magnified 300 times.

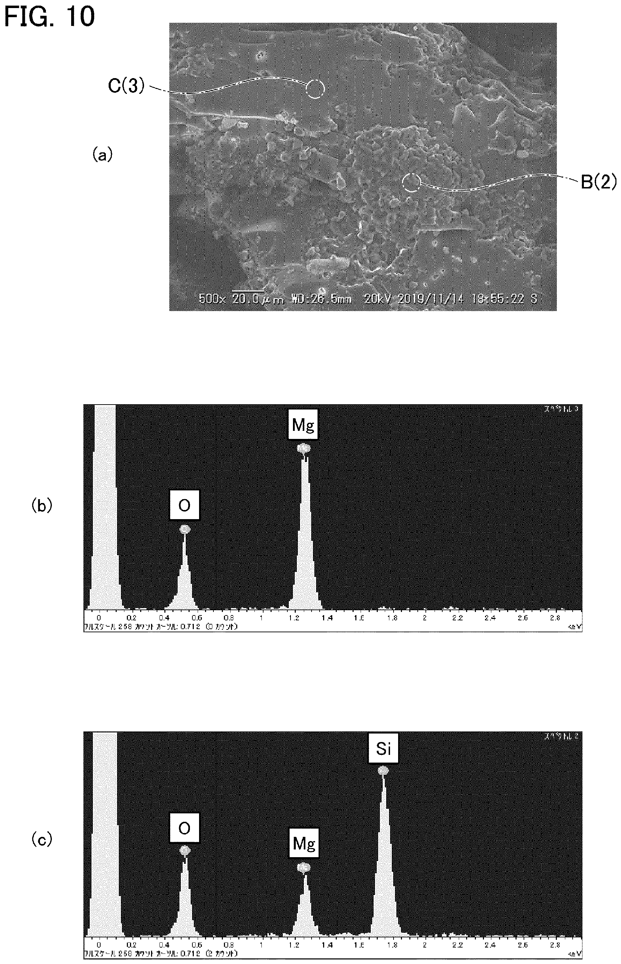

The cross section of the cut cylindrical test sample 2-1 prepared in the example 2-1 was observed using an energy dispersive X-ray spectroscopy (EDX). Fig. 10(a) illustrates an SEM image of the test sample 2-1 magnified 500 times. Fig. 10(b) illustrates an EDX spectrum in the part of a symbol B in Fig. 10(a), and Fig. 10(c) illustrates an EDX spectrum in the part of a symbol C in Fig. 10(a).

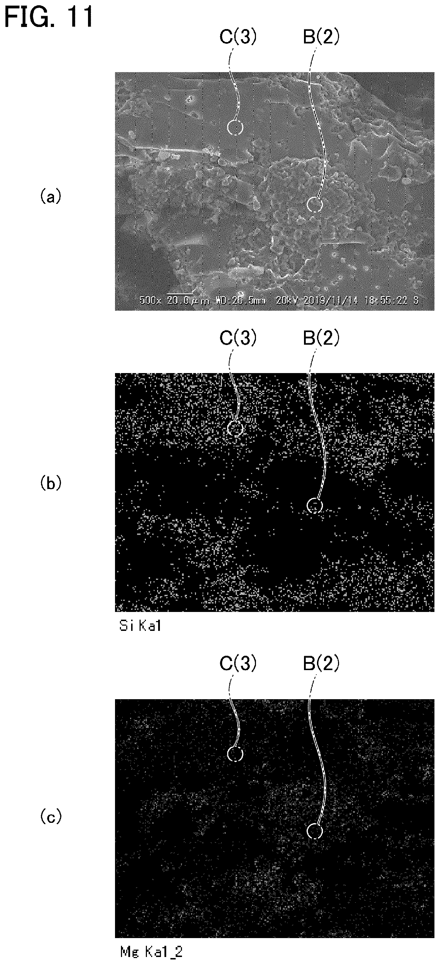

Fig. 11 illustrates an SEM image and mapping data of silicon (Si) and magnesium (Mg) when an energy dispersive X-ray analysis was performed on the test sample 2-1 of the example 2-1. Fig. 11(a) illustrates an SEM image of the test sample 2-1 magnified 500 times, Fig. 11(b) illustrates mapping data of silicon, and Fig. 11(c) illustrates mapping data of magnesium.

From the SEM images in Figs. 9(a) and 10(a), it can be confirmed that particles of the magnesia powder (inorganic particles 2) are bound to each other through the binding part 3 in the test sample 2-1 of the example 2-1. A dense structure can be confirmed in the test sample 2-1. From the EDX spectra in Fig. 10(b) and the mapping data in Figs. 11(b) and 11(c), the part indicated by the symbol B contains Mg and O, indicating magnesia, which is the raw material. From the EDX spectra in Fig. 10(c) and the mapping data in Figs. 11(b) and 11(c), the part indicated by the symbol C contains Mg, Si, and O, indicating magnesium silicate formed by a reaction of silica with a magnesium acetate aqueous solution, which are the raw materials.

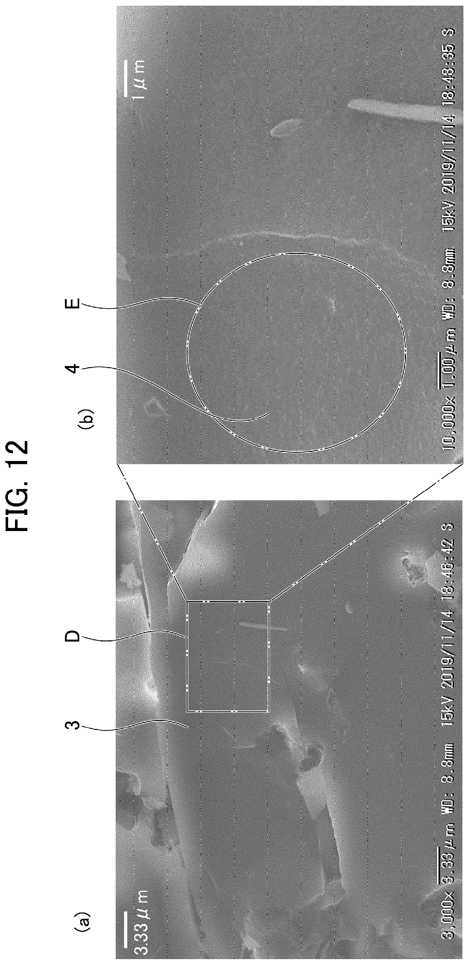

Fig. 12(a) illustrates an SEM image of the binding part 3 in the test sample 2-1 magnified 3,000 times, and Fig. 12(b) illustrates an SEM image of the part of a symbol D in Fig. 12(a) magnified 10,000 times. From Fig. 12(a), it can be seen that the binding part 3 in the test sample 2-1 is highly smooth and forms a dense phase. As indicated by a symbol E in Fig. 12(b), it can be confirmed that fine particles 4 with a particle size of 100 nm or less are included inside the binding part 3.

### (Porosity measurement)

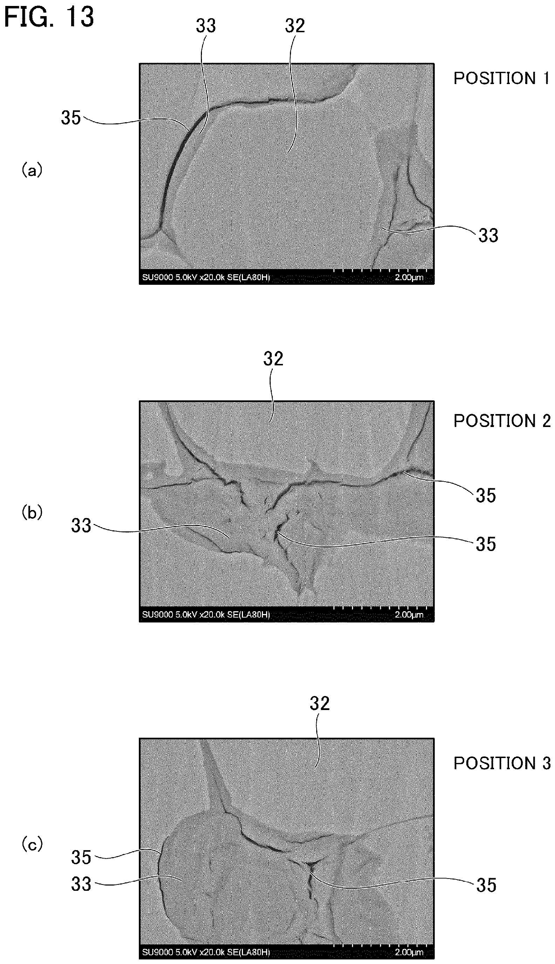

First, cross section polisher processing (CP processing) was applied to the cross section of the test sample 2-1 of the example 2-1, which is cylindrical. Then, using a scanning electron microscope (SEM), a reflected electron image was observed at a magnification of 50,000 times on the cross section of the test sample 2-1. Figs. 13(a), 13(b), and 13(c) illustrate reflected electron images obtained by observing three points (positions 1 to 3) in the cross section of the test sample 2-1. In the observed reflected electron images, a white part 32 is magnesia, a gray part 33 is a silicon-containing compound, and black parts 35 are pores.

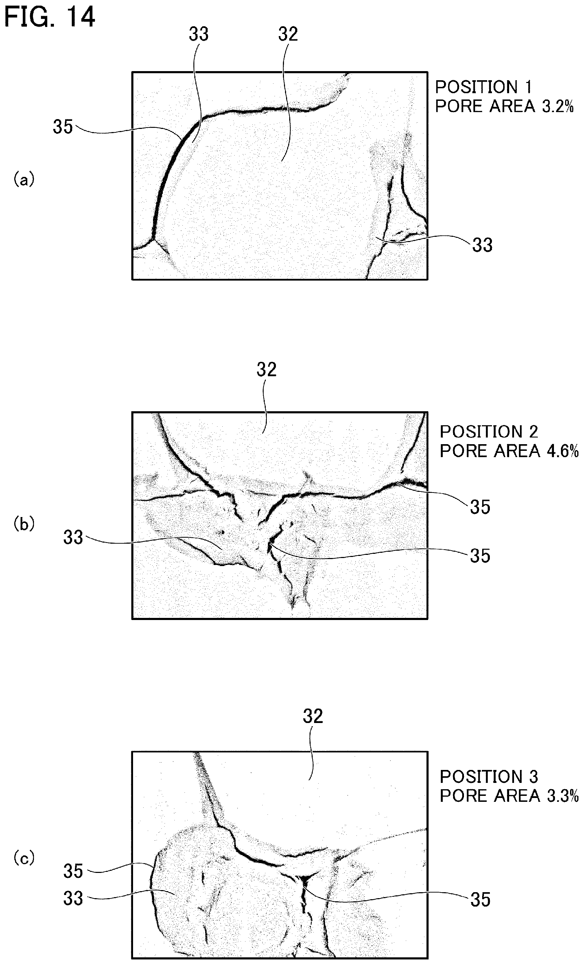

Next, through binarizing the SEM images of the three fields, the pore portions were clarified. The binarized images of the reflected electron images of Figs. 13(a), 13(b), and 13(c) are illustrated in Figs. 14(a), 14(b), and 14(c), respectively. Then, the area percentage of the pore portion was calculated from the binarized image, and the average value was taken as the porosity. Specifically, in Fig. 14(a), the area percentage of the pore portion at position 1 was 3.2%. In Fig. 14(b), the area percentage of the pore portion at position 2 was 4.6%. In Fig. 14(c), the area percentage of the pore at position 3 was 3.3%. Thus, the porosity of the test sample 2-1 of the example 2-1 prepared this time was 3.7%, which is the average value of the area percentage of the pore portion at positions 1 to 3.

### (Thermal conductivity measurement)

The thermal conductivity of the test sample 2-1 of the example 2-1, the test sample 2-2 of the example 2-2, and the test sample 2-3 of the example 2-3 was measured according to JIS R1611 (method for measuring thermal diffusivity, specific heat capacity, and thermal conductivity of fine ceramics using a flash method). The thermal conductivity of each of the test samples is illustrated in Table 2. As illustrated in Table 2, the test samples 2-1, 2-2, and 2-3 in the examples indicated high thermal conductivity of more than 2.0 W/m·K, and the test sample 2-3 of the example 2-3 indicated a particularly high thermal conductivity of 5.5 W/m K. Thus, it can be seen from Tables 1 and 2 that the thermal conductivity of inorganic structures can be enhanced by increasing the proportion of magnesia.

**[Table 2]**

| | Thermal conductivity |
|---|---|
| Example 2-1 | 2.0W/m▪K |
| Example 2-2 | 4.4W/m▪K |
| Example 2-3 | 5.5W/m▪K |

Although the present embodiment has been described above, the present embodiment is not limited to these descriptions, and various modifications are possible within the scope of the gist according to the present embodiment.

The entire contents of Japanese Patent Application No. 2020-092473 (filed May 27, 2020) are incorporated herein by reference.

### INDUSTRIAL APPLICABILITY

The present disclosure makes it possible to provide an inorganic structure that can be prepared through a simple method and has even higher density, and a method for producing the inorganic structure.

### REFERENCE SIGNS LIST

- 1, 1A: Inorganic structure
- 2: Inorganic particles
- 3: Binding part
- 4: Fine particles
- 11: Inorganic particles
- 12: Silicon dioxide particles
- 13: Aqueous solution containing a metallic element

## Claims

1. An inorganic structure, comprising:
a plurality of inorganic particles; and
a binding part that covers a surface of each of the inorganic particles and binds the inorganic particles together, wherein
the binding part contains: an amorphous compound containing silicon, oxygen, and one or more metallic elements; and fine particles having an average particle size of 100 nm or less.

2. The inorganic structure according to claim 1, wherein the binding part contains substantially no alkali metallic element, B, V, Te, P, Bi, Pb, and Zn.

3. The inorganic structure according to claim 1 or 2, wherein the binding part contains substantially no Ca, Sr, and Ba.

4. The inorganic structure according to any one of claims 1 to 3, wherein the inorganic particles and the binding part contain the same metallic element.

5. The inorganic structure according to any one of claims 1 to 4, wherein the inorganic particles have a volume ratio greater than that of the binding part.

6. The inorganic structure according to any one of claims 1 to 5, wherein the binding part further contains a crystalline compound containing the one or more metallic elements constituting the amorphous compound.

7. The inorganic structure according to any one of claims 1 to 6, wherein the inorganic particles are made from a simple metal oxide or a complex metal oxide, and the simple metal oxide contains one metallic element and the complex metal oxide contains two or more metallic elements.

8. The inorganic structure according to any one of claims 1 to 7, wherein the inorganic structure has a porosity of 20% or less.

9. The inorganic structure according to any one of claims 1 to 8, wherein the inorganic particles are crystalline.

10. The inorganic structure according to any one of claims 1 to 9, wherein the inorganic structure has a thickness of 500 µm or more.

11. A method for producing an inorganic structure according to any one of claims 1 to 10, comprising:
a step for obtaining a mixture by mixing a plurality of inorganic particles, a plurality of amorphous silicon dioxide particles, and an aqueous solution containing a metallic element; and
a step for pressurizing and heating the mixture under conditions of a pressure of 10 to 600 MPa and a temperature of 50 to 300 °C.
